# EUROPEAN PATENT SPECIFICATION

(11) **EP 2 831 205 B1**
(45) Date of publication and mention of the grant of the patent: **04.05.2022**
(21) Application number: 13717370.4
(22) Date of filing: 28.03.2013
(51) Int. Cl.: C10G 45/04, B01J 21/10, B01J 23/06, B01J 23/28, B01J 23/30, C10G 65/04, C10G 3/00, B01J 23/00, B01J 23/888, B01J 37/20, B01J 23/882, B01J 23/883, B01J 35/10

(54) **COPROCESSING OF BIOFEEDS WITH BULK MIXED METAL CATALYSTS**
CO-VERARBEITUNG VON BIOFEEDS MIT BULK-METALLMISCHKATALYSATOREN
CO-TRAITEMENT DE BIO-ALIMENTATIONS COMPORTANT DES CATALYSEURS MÉTALLIQUES MIXTES EN VRAC

(30) Priority: 30.03.2012 US 201261617984 P; 27.03.2013 US 201313851176
(43) Date of publication of application: 04.02.2015
(73) Proprietor: ExxonMobil Research and Engineering Company, Annandale, NJ 08801-0900 (US)
(72) Inventor: FINGLAND, Bradley, R., Annandale, NJ 08801 (US); HANKS, Patrick, Loring, Fairfax, VA 22033 (US); SOLED, Stuart, Leon, Pittstown, NJ 08867 (US); MISEO, Sabato, Pittstown, NJ 08867 (US)
(74) Representative: ExxonMobil Chemical Europe Inc.
(86) International application number: PCT/US2013/034209
(87) International publication number: WO 2013/148910

(56) References cited:
- WO-A1-2011/027044
- WO-A1-2011/030009
- US-A1- 2011 163 009
- US-A1- 2011 294 656

## Description

### FIELD

This invention relates to a method for hydroprocessing feeds derived in part or whole from renewable biological sources utilizing bulk metal catalysts to deoxygenate the biocomponent feeds.

### BACKGROUND

Regulations related to renewable fuels provide an example of how product requirements can change over time. During the next decade, the United States, Canada, and the European Union have increased and/or are likely to increase the required amount of product from renewable sources that is contained in transportation fuels. Based on such regulatory requirements, fuels from vegetable, animal, or algae sources such as "biodiesel" will become increasingly important as a refinery product. As a result, methods are needed that will allow existing refinery equipment to produce suitable transportation fuels that incorporate increasing amounts of renewable components.

Unfortunately, the differences in chemical composition between renewable carbon sources and mineral sources poses some difficulties for refinery processing. For example, typical biologically-derived sources for fuels have oxygen contents of 1 wt% or more, possibly as much as 10 wt% or more. Conventional hydroprocessing methods can remove oxygen from a feedstock, but the by-products from deoxygenation can lead to catalyst poisoning and/or contaminant build-up in a reaction system.

U.S. Patent Application Publication 2010/0163458 describes a method for converting effluents of renewable origin into fuel. The method includes the use of a supported catalyst containing MoS₂ and a dopant, such as phosphorus, carbon, or silicon. The method is described as favoring removal of oxygen by hydrodeoxygenation as opposed decarbonylation or decarboxylation.

U. S. Patent Application Publication 2011/0166396 describes a hydrodeoxygenation catalyst and a method for using such a catalyst. The catalyst is a supported catalyst containing Mo, with a support that includes a bimodal pore distribution. Additionally, at least 2 volume percent of the pores in the support are greater than 50 nm in diameter. The Mo catalyst with the specified pore distribution is used to perform hydrodeoxygenation on feeds containing up to 35 vol.% of renewable organic material.

The following documents disclose methods for hydroprocessing a biocomponent feedstock and are also of interest: U. S. Patent Application Publication

2011/0163009, WO 2011/03009, WO 2011/027044 and U. S. Patent Application Publication 2011/0294656.

### SUMMARY OF EMBODIMENTS OF THE INVENTION

The present invention relates to a method for hydroprocessing a biocomponent feedstock as described in the appended claims

[Deleted]

[Deleted]

[Deleted]

[Deleted]

[Deleted]

### BRIEF DESCRIPTION OF THE DRAWINGS

Figure 1 schematically shows a reaction system suitable for performing a process according to an embodiment of the method described herein.
Figure 2 depicts a reaction system suitable for performing a process according to an embodiment of the invention.
Figures 3 through 5 show analysis plots from comparative experiments as further described in the Examples herein.

### DETAILED DESCRIPTION OF THE PREFERRED EMBODIMENTS

In various aspects, methods are provided for processing of bio-feedstocks or biocomponent feedstocks using utilizing bulk metal catalysts in order to remove oxygen (deoxygenate) from the bio- or biocomponent feedstocks. By the term "bio-feedstock" used herein it is meant a material that is essentially 100% biologically derived materials. The term "biocomponent feedstock" (or alternatively "bio-containing feedstock") used herein it is meant a material that contains at least in part some biologically derived materials; this term may encompass a stream containing 100% biologically derived materials. Preferably, the term "biocomponent feedstock" contains at least in part some biologically derived materials as well at least in part some mineral oils. In contrast, the term a "mineral feedstock" (or "mineral oil") as used herein means a hydrocarbon material that is derived from sources termed in the industry as "non-renewable" sources, such as feedstocks containing or derived from crude oils, oil shales, oil sands, tar sands, natural gases and the like.

The deoxygenation step or "zone" as described herein may be used independently of the requirement of any further processing step, or it may be used as part of a stacked catalyst bed arrangement. The deoxygenation zone or the stacked beds can include one or more at least partial catalyst beds of a bulk metal (or "bulk mixed metal") catalyst as further described here in. One or more subsequent beds can include a hydrotreating catalyst, such as, but not limited to, a supported CoMo or NiMo hydrotreating catalyst.

One way to adapt existing reactors to meet changing requirements can be to co-process multiple feeds within a reactor. However, co-processing of multiple feeds in a hydroprocessing reactor can pose a variety of challenges. For example, feedstocks based on biological sources, such as feeds containing vegetable, animal, or algae oils or fats, can contain a substantial amount of oxygen. The oxygen contents of the biological source feedstocks can lead to production of undesirable amounts of CO and/or CO₂. The resulting CO and/or CO₂ generated from hydroprocessing of the biological source feedstock can cause poisoning of the hydroprocessing catalyst. The product gases generated from such hydroprocessing may also have an increased ability to corrode hydroprocessing equipment. Still another concern is that removal of oxygen from a biocomponent feed is an exothermic reaction, potentially leading to difficulties in maintaining temperature control in a reactor. Additionally, removal of oxygen from a biocomponent feed typically requires a hydrogen source. Many refineries already have limitations on available hydrogen, and having yet another process that consumes hydrogen further limits the choices available to such a refinery.

It has been discovered herein that other problems that exist in deoxygenating and refining biocomponent feedstocks is that the activity of some hydrotreating catalysts may be sensitive to changes in reaction/processing conditions. In detail, the activity of some of the hydrotreating catalysts used in the art may be very sensitive to even minor changes in the reaction temperatures of the process when it relates to the deoxygenation reaction of the bio-components of the feedstocks. It has also been discovered herein that other problems that exist in deoxygenating and refining biocomponent feedstocks is that some hydrotreating catalysts in the art may consume a significant amount of hydrogen.

It has been discovered that one option for addressing at least some of the above problems is to use a bulk metal catalyst that includes at least one Group VI metal and at least one Group VIII metal in a deoxygenation zone for processing a bio-containing feed, i.e., a feed including both mineral-derived feedstock and biocomponent-derived feedstock. In some aspects, a feed including a mixture of mineral-derived feedstock and biocomponent-derived feedstock can be exposed to the bulk metal catalyst under low pressure conditions, such as a hydrogen partial pressure of 400 psig (2.75 MPag) or less.

By the term "bulk metal cataiyst" (or equivalent term "bulk mixed metal catalyst") as used herein, it is meant that the catalyst is comprised of at least 80 wt% active metals. By the term "active metals" it is meant at least one Group VI metal (corresponding to Group 6 of the modern IUPAC periodic table) and at least one Group VIII metal (corresponding to Groups 8-10 of the modern IUPAC periodic table). Preferably, the bulk metal catalyst comprises at least 90 wt%, more preferably at least 95 wt%, active metals. These bulk metal catalysts, and their preferred embodiments for use in the presently disclosed processes, are detailed further herein.

The bulk metal catalyst can be incorporated into a single or standalone deoxygenation reaction stage or zone, or conversely as part of a reaction system as part of multi-bed and/or multi-stage process for processing of a biocomponent feedstock. In the system, one or more initial beds or stages include a bulk metal catalyst. In the deoxygenation stage, a biocomponent feed is initially exposed to a bulk metal catalyst under effective conditions for at least a portion of the oxygen from the feed. The feed with reduced oxygen content can then optionally further be exposed to a conventional hydrotreatment catalyst under effective hydrotreatment conditions for removal of sulfur and nitrogen, as well as any remaining oxygen.

Treating a feed containing a biocomponent portion with a bulk metal catalyst prior to hydrotreatment of the feed can provide a variety of advantages. One potential advantage is reduction of the exotherm across the catalyst bed for the hydrotreating catalyst. Deoxygenation reactions are strongly exothermic, so combining deoxygenation of a biocomponent feed with a conventional hydrodesulfurization process on a sulfur-containing mineral feed could lead to an excessive temperature increase across a catalyst bed. Because the bulk metal catalysts herein are selective for performing deoxygenation relative to desulfurization, the temperature increase across the catalyst bed for the bulk metal catalyst will typically be more manageable. Another potential advantage is an improved overall catalyst activity for the combination of the bulk metal catalyst and the hydrotreating catalyst, relative to using a similar size bed of only hydrotreating catalyst. Deoxygenation reactions typically produce both water and carbon oxides as residual products. The combination of water and carbon oxides can lead to deactivation of some types of hydrotreating catalysts. In some reaction system configurations, one or more initial beds of a bulk metal catalyst can be used to perform deoxygenation prior to exposing a feedstock to a hydrotreating catalyst. The water and carbon oxide contaminants generated during deoxygenation can be separated out prior to exposing the deoxygenated feed to an alternative subsequent hydrotreating catalyst, thus reducing or avoiding any deactivation of the hydrotreating catalyst.

### Feedstocks

In the discussion below, a biocomponent feed or feedstock refers to a hydrocarbon feedstock derived at least in part from a biological raw material component, such as vegetable fats/oils or animal fats/oils, fish oils, pyrolysis oils, and algae lipids/oils, as well as components of such materials, and in some embodiments can specifically include one or more types of lipid compounds. Lipid compounds are typically biological compounds that are insoluble in water, but soluble in nonpolar (or fat) solvents. Non-limiting examples of such solvents include alcohols, ethers, chloroform, alkyl acetates, benzene, and combinations thereof.

Major classes of lipids include, but are not necessarily limited to, fatty acids, glycerol-derived lipids (including fats, oils and phospholipids), sphingosine-derived lipids (including ceramides, cerebrosides, gangliosides, and sphingomyelins), steroids and their derivatives, terpenes and their derivatives, fat-soluble vitamins, certain aromatic compounds, and long-chain alcohols and waxes.

In living organisms, lipids generally serve as the basis for cell membranes and as a form of fuel storage. Lipids can also be found conjugated with proteins or carbohydrates, such as in the form of lipoproteins and lipopolysaccharides.

Examples of vegetable oils that can be used in accordance with this invention include, but are not limited to rapeseed (canola) oil, soybean oil, coconut oil, sunflower oil, palm oil, palm kernel oil, peanut oil, linseed oil, tall oil, corn oil, castor oil, jatropha oil, jojoba oil, olive oil, flaxseed oil, camelina oil, safflower oil, babassu oil, tallow oil and rice bran oil.

Vegetable oils as referred to herein can also include processed vegetable oil material. Non-limiting examples of processed vegetable oil material include fatty acids and fatty acid alkyl esters. Alkyl esters typically include C₁-C₅ alkyl esters. One or more of methyl, ethyl, and propyl esters are preferred.

Examples of animal fats that can be used in accordance with the invention include, but are not limited to, beef fat (tallow), hog fat (lard), turkey fat, fish fat/oil, and chicken fat. The animal fats can be obtained from any suitable source including restaurants and meat production facilities.

Animal fats as referred to herein also include processed animal fat material. Non-limiting examples of processed animal fat material include fatty acids and fatty acid alkyl esters. Alkyl esters typically include C₁-C₅ alkyl esters. One or more of methyl, ethyl, and propyl esters are preferred.

Algae oils or lipids can typically be contained in algae in the form of membrane components, storage products, and/or metabolites. Certain algal strains, particularly microalgae such as diatoms and cyanobacteria, can contain proportionally high levels of lipids. Algal sources for the algae oils can contain varying amounts, *e.g*., from 2 wt% to 40 wt% of lipids, based on total weight of the biomass itself.

Algal sources for algae oils can include, but are not limited to, unicellular and multicellular algae. Examples of such algae can include a rhodophyte, chlorophyte, heterokontopbyte, tribophyte, glaucophyte, chlorarachniophyte, euglenoid, haptophyte, cryptomonad, dinoflagellum, phytoplankton, and the like, and combinations thereof. In one embodiment, algae can be of the classes Chlorophyceae and/or Haptophyta. Specific species can include, but are not limited to, *Neochloris oleoabundans, Scenedesmus dimorphus, Euglena gracilis, Phaeodactylum tricornutum*, *Pleurochrysis carterae,* *Prymnesium parvum, Tetraselmis chui,* and *Chlamydomonas reinhardtii.* Additional or alternate algal sources can include one or more microalgae of the *Achnanthes, Amphiprora, Amphora, Ankistrodesmus, Asterornonas, Boekelovia, Borodinella, Botryococcus, Bracteococcus, Chaetoceros, Carteria, Chlamydomonas, Chlorococcum, Chlorogonium, Chlorella, Chroomonas, Chrysosphaera, Cricosphaera, Crypthecodinium, Cryptomonas, Cyclotella, Dunaliella, Ellipsoidon. Emiliania, Eremosphaera, Ernodesmius, Euglena, Franceia, Fragilaria, Gloeothamnion, Haematococcus, Halocafeteria, Hymenomonas, Isochrysis, Lepocinclis, Micractinium, Monoraphidium, Nannochloris, Nannochloropsis, Navicula, Neochloris, Nephrochloris, Nephroselmis, Nitzschia, Ochromonas, Oedogonium, Oocystis, Ostreococcus, Pavlova, Parachlorella, Pascheria, Phaeodactylum, Phagus, Platymonas, Pleurocluysis. Pleurococcus, Proiotheca, Pseudochlorella, Pyramimonas, Pyrobotrys, Scenedesmus, Skele*/*onema, Spyrogyra, Stichococcus, Tetraselmis, Thalassiosira, Viridiella,* and *Volvox* species, and/or one or more cyanobacteria of the *Agmenellum, Anabaena, Anabaenopsis, Anacystis, Aphanizomenon, Arthrospira, Asterocapsa, Borzia, Calothrix, Chamaesiphon, Chlorogloeopsis, Chroococcidiopsis, Chroococcus, Crinalium, Cyanobacterium, Cyanobium, Cyanocystis, Cyanospira, Cyanothece, Cylindrospermopsis, Cylindrosperrnum, Dactylococcopsis, Dermocarpella, Fischerella, Fremyella, Geitleria, Geitlerinema, Gloeobacter, Gloeocapsa, Gloeothece, Halospirulina, Iyengariella, Leptolyngbya, Limnothrix, Lyngbya, Microcoleus, Microcystis, Myxosarcina, Nodularia, Nostoc, Nostochopsis, Oscillatoria, Phormidium, Plariktothrix, Pleurocapsa, Prochlorococcus, Prochloron, Prochlorothrix, Pseudanabaena, Rivularia, Schizothrix, Scytonema, Spirulina, Stanieria, Starria, Stigonema, Symploca, Synechococcus, Synechocystis, Tolypothrix, Trichodesmium, Tychonema,* and *Xenococcus* species.

Other biocomponent feeds usable in the present invention can include any of those which comprise primarily triglycerides and free fatty acids (FFAs). The triglycerides and FFAs typically contain aliphatic hydrocarbon chains in their structure having from 8 to 36 carbons, preferably from 10 to 26 carbons, for example from 14 to 22 carbons. Types of triglycerides can be determined according to their fatty acid constituents. The fatty acid constituents can be readily determined using Gas Chromatography (GC) analysis. This analysis involves extracting the fat or oil, saponifying (hydrolyzing) the fat or oil, preparing an alkyl (*e.g*., methyl) ester of the saponified fat or oil, and determining the type of (methyl) ester using GC analysis. In one embodiment, a majority (*i.e*., greater than 50%) of the triglyceride present in the lipid material can be comprised of C₁₀ to C₂₆ fatty acid constituents, based on total triglyceride present in the lipid material. Further, a triglyceride is a molecule having a structure identical to the reaction product of glycerol and three fatty acids. Thus, although a triglyceride is described herein as being comprised of fatty acids, it should be understood that the fatty acid component does not necessarily contain a carboxylic acid hydrogen. If triglycerides are present, a majority of triglycerides present in the biocomponent feed can preferably be comprised of C₁₂ to C₁₈ fatty acid constituents, based on total triglyceride content. Other types of feed that are derived from biological raw material components can include fatty acid esters, such as fatty acid alkyl esters (*e.g*., FAME and/or FAEE).

Typically, the feed can include at least 0.1 wt% of feed based on a biocomponent source, or at least 0.5 wt%, or at least 1 wt%, or at least 3 wt%, or at least 10 wt%, or at least 15 wt%. Additionally or alternately, the feed can include 35 wt% or less of a feed based on a biocomponent source, or 25 wt% or less, or 15 wt% or less. Optionally, the feedstock can include at least about 1% by weight of glycerides, lipids, fatty acids, fatty acid esters (such as fatty acid alkyl esters), or a combination thereof. The gylcerides can include monoglycerides, diglycerides, or triglycerides. For example, the feedstock can include at least about 5 wt%, or at least about 10 wt%, or at least 20 wt% of glycerides, lipids, fatty acids, fatty acid esters, fatty acid alkyl esters, or a combination thereof. If the feedstock contains glycerides, lipids, or fatty acid compounds, the feedstock can include about 35 wt% or less, or about 25 wt% or less, or about 15 wt% or less, or about 10 wt% or less of glycerides, lipids, fatty acids, fatty acid esters, fatty acid alkyl esters, or a combination thereof. For example, the feedstock can include glycerides and/or fatty acid esters. Preferably, the feedstock can include triglycerides, fatty acid methyl esters, or a combination thereof.

In an embodiment, the biocomponent portion of the feedstock (such as the glycerides and/or fatty acid esters) can be a non-hydrotreated portion. A non-hydrotreated feed can typically have an olefin content and an oxygen content similar to the content of the corresponding raw biocomponent material. Examples of suitable biocomponent feeds can include food grade vegetable oils, and biocomponent feeds that are refined, bleached, and/or deodorized.

Biocomponent based diesel boiling range feedstreams can have a wide range of nitrogen and/or sulfur contents. For example, a biocomponent based feedstream based on a vegetable oil source can contain up to about 300 wppm nitrogen. In contrast, a biomass based feedstream containing whole or ruptured algae can sometimes include a higher nitrogen content. Depending on the type of algae, the nitrogen cont-Int of an algae based feedstream can be at least about 2 wt%, for example at least about 3 wt%, at least about 5 wt%, or at least about 10 wt%, and algae with still higher nitrogen contents are known. The sulfur content of a biocomponent feed can also vary. In some embodiments, the sulfur content can be about 500 wppm or less, for example about 100 wppm or less, about 50 wppm or less, or about 10 wppm or less.

Aside from nitrogen and sulfur, oxygen can be another heteroatom component in biocomponent based feeds. A biocomponent diesel boiling range feedstream based on a vegetable oil, prior to hydrotreatment, can include up to about 10 wt% oxygen, for example up to about 12 wt% or up to about 14 wt%. Additionally or alternately, such a biocomponent diesel boiling range feedstream can include at least about 1 wt% oxygen, for example at least about 2 wt%, at least about 3 wt%, at least about 4 wt%, at least about 5 wt%, at least about 6 wt%, or at least about 8 wt%. Further additionally or alternately, a biocomponent feedstream, prior to hydrotreatment, can include an olefin content of at least about 3 wt%, for example at least about 5 wt% or at least about 10 wt%.

A mineral feedstock refers to a conventional (*e.g*., non-biocomponent) feedstock, typically derived from crude oil and that has optionally been subjected to one or more separation and/or other refining processes. In one preferred embodiment, the mineral feedstock can be a petroleum feedstock boiling in the diesel range or above. Examples of suitable feedstocks can include, but are not limited to, virgin distillates, hydrotreated virgin distillates, kerosene, diesel boiling range feeds (such as hydrotreated diesel boiling range feeds), light cycle oils, atmospheric gasoils, and the like, and combinations thereof.

Mineral feedstocks for blending with a biocomponent feedstock can have a nitrogen content from about 50 wppm to about 2000 wppm nitrogen, for example from about 50 wppm to about 1500 wppm or from about 75 to about 1000 wppm. In some embodiments, the mineral feedstock can have a sulfur content from about 100 wppm to about 10,000 wppm sulfur, for example from about 200 wppm to about 5,000 wppm or from about 350 wppm to about 2,500 wppm. Additionally or alternately, the combined (biocomponent plus mineral) feedstock can have a sulfur content of at least about 5 wppm, for example at least about 10 wppm, at least about 25 wppm, at least about 100 wppm, at least about 500 wppm, or at least about 1000 wppm. Further additionally or alternately, the combined feedstock can have a sulfur content of about 2000 wppm or less, for example about 1000 wppm or less, about 500 wppm or less, about 100 wppm or less, or about 50 wppm or less.

The content of sulfur, nitrogen, oxygen, and olefins in a feedstock created by blending two or more feedstocks can typically be determined using a weighted average based on the blended feeds. For example, a mineral feed and a biocomponent feed can be blended in a ratio of 80 wt% mineral feed and 20 wt% biocomponent feed. If the mineral feed has a sulfur content of about 1000 wppm, and the biocomponent feed has a sulfur content of about 10 wppm, the resulting blended feed could be expected to have a sulfur content of about 802 wppm.

Diesel boiling range feedstreams suitable for use in the present invention tend to boil within the range of about 215°F (about 102°C) to about 800°F (about 427°C). Preferably, the diesel boiling range feedstream has an initial boiling point of at least about 215°F (about 102°C), for example at least about 250°F (about 121°C), at least about 275°F (about 135°C), at least about 300°F (about 149°C), at least about 325°F (about 163°C), at least about 350°F (about 177°C), at least about 400°F (about 204°C), or at least about 451°F (about 233°C). Preferably, the diesel boiling range feedstream has a final boiling point of about 800°F (about 427°C) or less, or about 775°F (about 413°C) or less, or about 750°F (about 399°C) or less. In some embodiments, the diesel boiling range feedstream can have a boiling range from about 451°F (about 233°C) to about 800°C (about 427°C). Additionally or alternately, the feedstock can be characterized by the boiling point required to boil a specified percentage of the feed. For example, the temperature required to boil at least 5 wt% of a feed is referred to as a "T5" boiling point. A suitable mineral (petroleum) feedstock can have a T5 boiling point of at least about 230°F (about 110°C), for example at least about 250°F (about 121°C) or at least about 275°F (about 135°C). Further additionally or alternately, the mineral (petroleum) feedstock can have a T95 boiling point of about 775°F (about 418°C) or less, for example about 750°F (about 399°C) or less or about 725°F (about 385°C) or less. In another embodiment, the diesel boiling range feedstream can also include kerosene range compounds to provide a feedstream with a boiling range from about 250°F (about 121°C) to about 800°F (about 427°C).

### Reactions for Oxygen Removal

Oxygen removal during hydroprocessing of a feedstock typically occurs via one of three reaction pathways. One potential reaction pathway is hydrodeoxygenation. In a hydrodeoxygenation reaction, oxygen is removed from feed molecule as water. The carbon chain for the feed molecule remains intact after a typical hydrodeoxygenation reaction. Water is a contaminant that can potentially contribute to deactivation of some conventional hydrotreating catalysts, such as NiMo or CoMo type catalysts. However, by itself water does not lead to corrosion within a reaction system. Additionally, removing oxygen as water maintains the chain length of a feed molecule. Maintaining the chain length of molecules intended for use as a fuel or fuel blending product is usually beneficial, as it means that a greater percentage of the carbon from the feed is incorporated into the final fuel product.

Hydrodecarboxylation removes oxygen by forming CO₂ from biofeeds. This CO₂ forms carbonic acid when combined with water. Carbonic acid corrosion may require metallurgical upgrades to carbon steel in downstream equipment, particularly fin fans, heat exchangers, and other locations that liquid water will be present prior to a an amine scrubbing system or other system for removing CO₂.

Hydrodecarbonylation removes oxygen by forming CO from biofeeds. CO is a known inhibitor for hydrodesulfurization. For example, 1000ppm CO can deactivate a conventional CoMo catalyst by 10%. CO is also not removed in appreciable quantities by conventional amine scrubbing systems. As such, CO can build up through gas recycle and can be cascaded to downstream hydrotreatment, dewaxing, and/or hydrofinishing stages. As a result, removing oxygen from a biocomponent feed as CO may require the use of pressure swing adsorbers (including rapid cycle pressure swing adsorbers) or other gas cleaning equipment in order to remove CO from a reaction system.

Depending on the conditions present in a reactor, the relative amounts of CO and CO₂ in a reactor can be modified by the water gas shift reaction. The water gas shift reaction is an equilibrium reaction that can convert CO₂ and H₂ into CO and H₂O. Due to the water gas shift reaction, the amount of decarbonylation and decarboxylation may not be clear, due to conversion from one form of carbon oxide to another. Hydrodeoxygenation can be distinguished at least in part from decarbonylation and decarboxylation by characterizing the odd versus even numbered carbons in a deoxygenated product.

Because feeds derived from biological sources typically have carbon chains with even numbers of carbon molecules, hydrodeoxygenation can be distinguished from decarbonylation and decarboxylation based on the carbon chain length of the resulting molecules. Hydrodeoxygenation typically leads to production of molecules with an even number of carbon atoms while decarbonylation and decarboxylation lead to molecules with an odd number of carbon atoms.

### Deoxygenation Stage Catalysts

A catalyst suitable for oxygen removal during processing of a biocomponent feedstock in the deoxygenation stage (i.e., zone) herein is a bulk metal (or equivalent term "bulk mixed metal") catalyst. As used herein, the term "bulk", when describing a mixed metal catalyst composition, indicates that the catalyst composition is self-supporting in that it does not require a carrier or support. It is well understood that bulk catalysts may have some minor amount of carrier or support material in their compositions (*e.g*., about 15 wt% or less, about 10 wt% or less, about 5 wt% or less, or substantially no carrier or support, based on the total weight of the catalyst composition); for instance, bulk hydroprocessing catalysts may contain an amount of a binder, *e.g.,* to improve the physical and/or thermal properties of the catalyst. In contrast, heterogeneous or supported catalyst systems typically comprise a carrier or support onto which one or more catalytically active materials are deposited, often using an impregnation or coating technique.

Nevertheless, heterogeneous catalyst systems without a carrier or support (or with a minor amount of carrier or support) are generally referred to as bulk catalysts and are frequently formed by co-precipitation techniques. In the bulk metal catalysts (or equivalent term "bulk mixed metal catalysts") as used herein, it is meant that the catalyst is comprised of at least 80 wt% active metals. By the term "active metals" it is meant at least one Group VI metal (corresponding to Group 6 of the modern IUPAC periodic table) and at least one Group VIII metal (corresponding to Groups 8-10 of the modern IUPAC periodic table). In alternative embodiments, the bulk metal catalysts herein may contain at least two Group VI metals and at least one Group VIII metal. Preferably, the bulk metal catalyst comprises at least 90 wt%, more preferably at least 95 wt%, active metals. The remainder of these bulk metal catalysts may be comprised of a suitable carrier or support, or in some embodiments, may contain additional organic compounds.

Preferably, the at least one Group VI metal is selected from Mo and W. Preferably, the at least one Group VIII metal is selected from Co and Ni. Preferred metal combinations for the bulk metal catalysts utilized herein in the deoxygenation stage are CoMo, NiMo, and NiMoW. Two preferred bulk metal catalysts for the deoxygenation stage are further described herein as well as exemplified by embodiments utilized in the Examples section herein.

### Catalyst 1 - Group VI/Group VIII/organic Bulk Metal Catalyst (Not according to the claimed invention)

In a preferred embodiment herein a bulk metal catalyst comprising at least one Group VI metal, at least one Group VIII metal, and at least one organic compound. It is desired that the organic compound is present on the catalyst at least at the beginning of the catalyst sulfiding step, but may be converted or destroyed during the sulfiding of the catalyst. In embodiments, the Group VI metal is selected from Mo and W. The Group VI metal is preferably Mo. In embodiments, the Group VIII metal is selected from Co and Ni. The Group VIII metal is preferably Co.

In preferred embodiments, the Group VI/Group VIII/organic bulk metal catalyst is comprised of at least 80 wt% Group VI/Group VIII oxides prior to sulfiding. In more preferred embodiments the Group VI/Group VIII/organic bulk metal catalyst is comprised of at least 90 wt% Group VI/Group VIII oxides prior to sulfiding. In alternate embodiments, the Group VI/Group VIII/organic bulk metal catalyst may contain from about 1 wt% to less than about 15 wt% of a support or binder material.

This aspect of the present invention relates to a bulk metal catalyst composition comprising at least one Group VI metal, at least one Group VIII metal, and a condensation reaction product formed from (i) a first organic compound containing at least one first functional group, and/or (ii) a second organic compound separate from said first organic compound and containing at least one second functional group, wherein said first functional group and said second functional group are capable of undergoing a condensation reaction and/or a (decomposition) reaction causing an additional unsaturation to form an associated product. Though the description above and herein often refers specifically to the condensation reaction product being an amide, it should be understood that any *in situ* condensation reaction product formed can be substituted for the amide described herein. For example, if the first functional group is a hydroxyl group and the second functional group is a carboxylic acid or an acid chloride or an organic ester capable of undergoing transesterification with the hydroxyl group, then the *in situ* condensation reaction product formed would be an ester.

The reaction product can be obtained by heating the composition (though specifically the condensation reactants, or the amine-containing compound and/or the carboxylic acid-containing compound) to a temperature preferably in the range of from about 195°C to about 250°C (about 383°F to about 482°F) for a time sufficient for the first and/or second organic compounds to form a condensation product, such as an amide, and/or an additional (decomposition) unsaturation *in situ.* It is desired that this reaction product is comprised of organic compounds and that these reaction products are present on the Group VI/Group VIII/organic bulk metal catalyst at the time that the catalyst is sulfided.

The Group VI/Group VIII/organic bulk metal catalyst may optionally further comprise at least one Group V one metal (corresponding to Group 5 of the modern IUPAC periodic table).

Generally, the atomic ratio of the Group VI metal(s) to the Group VIII metal(s) can be from about 2:1 to about 1:3, for example from about 5:4 to about 1:2, from about 5:4 to about 2:3, from about 5:4 to about 3:4, from about 10:9 to about 1:2, from about 10:9 to about 2:3, from about 10:9 to about 3:4, from about 20:19 to about 2:3, or from about 20:19 to about 3:4. When the composition further comprises at least one metal from Group 5, that at least one metal can be V and/or Nb.

Non-limiting examples of suitable mixed metal oxide compositions can include, but are not limited to, nickel-tungsten oxides, cobalt-tungsten oxides, nickel-molybdenum oxides, cobalt-molybdenum oxides, nickel-molybdenum-tungsten oxides, cobalt-molybdenum-tungsten oxides, cobalt-nickel-tungsten oxides, cobalt-nickel-molybdenum oxides, cobalt-nickel-tungsten-molybdenum oxides, nickel-tungsten-niobium oxides, nickel-tungsten-vanadium oxides, cobalt-tungsten-vanadium oxides, cobalt-tungsten-niobium oxides, nickel-molybdenum-niobium oxides, nickel-molybdenum-vanadium oxides, nickel-molybdenum-tungsten-niobiurn oxides, nickel-molybdenum-tungsten-vanadium oxides, and the like, and combinations thereof.

Suitable mixed metal oxide compositions can advantageously exhibit a specific surface area (as measured via the nitrogen BET method using a Quantachrome Autosorb^{™} apparatus) of at least about 20 m²/g, for example at least about 30 m²/g, at least about 40 m²/g, at least about 50 m²/g, at least about 60 m²/g, at least about 70 m²/g, or at least about 80 m²/g. Additionally or alternately, the mixed metal oxide compositions can exhibit a specific surface area of not more than about 500 m²/g, for example not more than about 400 m²/g, not more than about 300 m²/g, not more than about 250 m²/g, not more than about 200 m²/g, not more than about 175 m²/g, not more than about 150 m²/g, not more than about 125 m²/g, or not more than about 100 m²/g.

In an embodiment of any of the compositions and/or processes described herein, the first organic compound can comprise at least 10 carbon atoms, for example can comprise from 10 to 20 carbon atoms or can comprise a primary monoamine having from 10 to 30 carbon atoms. Additionally or alternately, the second organic compound can comprise at least 10 carbon atoms, for example can comprise from 10 to 20 carbon atoms or can comprise only one carboxylic acid group and can have from 10 to 30 carbon atoms.

Representative examples of organic compounds containing amine groups can include, but are not limited to, primary and/or secondary, linear, branched, and/or cyclic amines, such as triacontanylamine, octacosanylamine, hexacosanylamine, tetracosanylamine, docosanylamine, erucylamine, eicosanylamine, octadecylamine, oleylamine, linoleylamine, hexadecylamine, sapienylamine, palmitoleylamine, tetradecylamine, myristoleylamine, dodecylamine, decylamine, nonylamine, cyclooctylamine, octylamine, cycloheptylamine, heptylamine, cyclohexylamine, n-hexylamine, isopentylamine, n-pentylamine, t-butylamine, n-butylamine, isopropylamine, n-propylamine, adamantanamine, adamantanemethylamine, pyrrolidine, piperidine, piperazine, imidazole, pyrazole, pyrrole, pyrrolidine, pyrroline, indazole, indole, carbazole, norbornylamine, aniline, pyridylamine, benzylamine, aminotoluene, alanine, arginine, aspartic acid, glutamic acid, glutamine, glycine, histidine, isoleucine, leucine, lysine, phenylalanine, serine, threonine, valine, 1-amino-2-propanol, 2-amino-1-propanol, diaminoeicosane, diaminooctadecane, diaminohexadecane, diammotetradecane, diaminododecane, diaminodecane, 1,2-diaminocydobexane, 1,3-diaminocyclohexane, 1,4-diaminocyclohexane, ethylenediamine, ethanolamine, p-phenylenediamine, o-phenylenediamine, m-phenylenediamine, 1,2-propylenediamine, 1,3-propylenediamine, 1,4-diaminobutane, 1,3-diamino-2-propanol, and the like, and combinations thereof. In an embodiment, the molar ratio of the Group VI metal(s) in the composition to the first organic compound during treatment can be from about 1:1 to about 20:1.

The amine functional group from the first organic compound can include primary or secondary amines, as mentioned above, but generally does not include tertiary or quaternary amines, as tertiary and quaternary amines tend not to be able to form amides. Furthermore, the first organic compound can contain other functional groups besides amines, whether or not they are capable of participating in forming an amide or other condensation reaction product with one or more of the functional groups from second organic compound.

Additionally or alternately, the amine portion of the first organic compound can be a part of a larger functional group in that compound, so long as the amine portion (notably the amine nitrogen and the constituents attached thereto) retains the capability of participating in forming an amide or other condensation reaction product with one or more of the functional groups from second organic compound.

Representative examples of organic compounds containing carboxylic acids can include, but are not limited to, primary and/or secondary, linear, branched, and/or cyclic amines, such as triacontanoic acid, octacosanoic acid, hexacosanoic acid, tetracosanoic acid, docosanoic acid, erucic acid, docosahexanoic acid, eicosanoic acid, eicosapentanoic acid, arachidonic acid, octadecanoic acid, oleic acid, elaidic acid, stearidonic acid, linoleic acid, alpha-linolenic acid, hexadecanoic acid, sapienic acid, palmitoleic acid, tetradecanoic acid, myristoleic acid, dodecanoic acid, decanoic acid, nonanoic acid, cyclooctanoic acid, octanoic acid, cycloheptanoic acid, heptanoic acid, cyclohexanoic acid, hexanoic acid, adamantanecarboxylic acid, norbomaneacetic acid, benzoic acid, salicylic acid, acetylsalicylic acid, citric acid, maleic acid, malonic acid, glutaric acid, lactic acid, oxalic acid, tartaric acid, cinnamic acid, vanillic acid, succinic acid, adipic acid, phthalic acid, isophthalic acid, terephthalic acid, ethylenediaminetetracarboxylic acids (such as EDTA), fumaric acid, alanine, arginine, aspartic acid, glutamic acid, glutamine, glycine, histidine, isoleucine, leucine, lysine, phenylalanine, serine, threonine, valine, 1,2-cyclohexanedicarboxylic acid, 1,3-cyclohexanedicarboxylic acid, 1,4-cyclohexanedicarboxylic acid, and the like, and combinations thereof. In an embodiment, the molar ratio of the Group VI metal(s) in the composition to the second organic compound during treatment can be from about 3:1 to about 20:1.

In certain embodiments, the organic compound(s)/additive(s) and/or the reaction product(s) are not located/incorporated within the crystal lattice of the mixed metal oxide precursor composition, *e.g*., instead being located on the surface and/or within the pore volume of the precursor composition and/or being associated with (bound to) one or more metals or oxides of metals in a manner that does not significantly affect the crystalline lattice of the mixed metal oxide precursor composition, as observed through XRD and/or other crystallographic spectra. It is noted that, in these certain embodiments, a sulfided version of the mixed metal oxide precursor composition can still have its sulfided form affected by the organic compound(s)/additive(s) and/or the reaction product(s), even though the oxide lattice is not significantly affected.

While there is not a strict limit on the ratio between the first organic compound and the second organic compound when utilized together, because the goal of the addition of the first and second organic compounds is to attain a condensation reaction product, it may be desirable to have a ratio of the reactive functional groups within the first and second organic compounds, respectively, from about 1:4 to about 4:1, for example from about 1:3 to about 3:1 or from about 1:2 to about 2:1.

In additional embodiments, although not required, the Group VI/Group VIII/organic bulk metal catalyst may be combined with a binder for use in the biocomponent feed deoxygenation processes described herein. Also, although not required, it is preferred that the binder be added to the Group VI/Group VIII/organic bulk metal catalyst after performing the reaction step described herein (i.e., the thermal heating step to form the condensation and/or decomposition products from the organic catalyst components).

In one embodiment, the heating temperature of the reaction step can be at least about 120°C, for example at least about 150°C, at least about 165°C, at least about 175°C, at least about 185°C, at least about 195°C, at least about 200°C, at least about 210°C, at least about 220°C, at least about 230°C, at least about 240°C, or at least about 250°C. Additionally or alternately, the heating temperature can be not greater than about 400°C, for example not greater than about 375°C, not greater than about 350°C, not greater than about 325°C, not greater than about 300°C, not greater than about 275°C, not greater than about 230°C, not greater than about 240°C, not greater than about 230°C, not greater than about 220°C, not greater than about 210°C, or not greater than about 200°C.

In one embodiment, the heating can be conducted in a low- or non-oxidizing atmosphere (and conveniently in an inert atmosphere, such as nitrogen). In an alternate embodiment, the heating can be conducted in a moderately- or highly-oxidizing environment. In another alternate embodiment, the heating can include a multi-step process in which one or more heating steps can be conducted in the low- or non-oxidizing atmosphere, in which one or more heating steps can be conducted in the moderately- or highly-oxidizing environment, or both. The period of time for the heating in the environment can be from about 5 minutes to about 168 hours, for example from about 10 minutes to about 96 hours, from about 10 minutes to about 48 hours, or from about 10 minutes to about 24 hours.

In an embodiment, the organically treated catalyst precursor composition and/or the catalyst precursor composition containing the reaction product can contain from about 4 wt% to about 20 wt%, for example from about 5 wt% to about 15 wt%, carbon resulting from the first and/or second organic compounds and/or from the condensation product, as applicable, based on the total weight of the relevant composition.

A sulfided catalyst composition can then be produced by sulfiding the Group VI/Group VIII/organic bulk metal catalyst. Sulfiding is generally carried out by contacting the catalyst precursor composition containing the reaction product with a sulfur-containing compound (e.g., elemental sulfur, hydrogen sulfide, polysulfides, or the like, or a combination thereof, which may originate from a fossil/mineral oil stream, from a biocomponent-based oil stream, from a combination thereof, or from a sulfur-containing stream separate from the aforementioned oil stream(s)) at a temperature and for a time sufficient to substantially sulfide the composition and/or sufficient to render the sulfided composition active as a deoxygenation catalyst. For instance, the sulfidation can be carried out at a temperature from about 300°C to about 400°C, *e.g*., from about 310°C to about 350°C, for a period of time from about 30 minutes to about 96 hours, *e.g*., from about 1 hour to about 48 hours or from about 4 hours to about 24 hours. The sulfiding can generally be conducted before or after combining the metal (oxide) containing composition with a binder, if desired, and before or after forming the composition into a shaped catalyst. The sulfiding can additionally or alternately be conducted *in situ* in a hydroprocessing reactor. Obviously, to the extent that a reaction product of the first and second organic compounds contains an *in situ* amide and/or additional unsaturations, it would generally be desirable for the sulfidation (and/or any catalyst treatment after the organic treatment) to significantly maintain the *in situ* amide and/or additional unsaturations of said reaction product.

The sulfided Group VI/Group VIII/organic bulk metal catalyst composition preferably exhibits a layered structure comprising a plurality of stacked YS₂ layers, where Y is the Group VI metal(s), such that the average number of stacks (typically for bulk organically treated catalysts) can be from about 1.5 to about 3.5, for example from about 1.5 to about 3.0, from about 2.0 to about 3.3, from about 2.0 to about 3.0, or from about 2.1 to about 2.8. For instance, the treatment of the metal (oxide) containing precursor composition according to the invention can afford a decrease in the average number of stacks of the treated precursor of at least about 0.8, for example at least about 1.0, at least about 1.2, at least about 1.3, at least about 1.4, or at least about 1.5, as compared to an untreated metal (oxide) containing precursor composition. As such, the number of stacks can be considerably less than that obtained with an equivalent sulfided mixed metal (oxide) containing precursor composition produced without the first and second organic compound treatment and optionally but preferably less than that obtained with an equivalent sulfided mixed metal (oxide) containing precursor composition produced by treatment with either the first organic compound or the second organic compound (but not both). The reduction in the average number of stacks can be evidenced, *e.g*., via X-ray diffraction spectra of relevant sulfided compositions, in which the (002) peak appears significantly broader (as determined by the same width at the half-height of the peak) than the corresponding peak in the spectrum of the sulfided mixed metal (oxide) containing precursor composition produced without the organic treatment (and/or, in certain cases, with only a single organic compound treatment) according to the present invention. Additionally or alternately to X-ray diffraction, transmission electron microscopy (TEM) can be used to obtain micrographs of relevant sulfided compositions, including multiple microcrystals, within which micrograph images the multiple microcrystals can be visually analyzed for the number of stacks in each, which can then be averaged over the micrograph visual field to obtain an average number of stacks that can evidence a reduction in average number of stacks compared to a sulfided mixed metal (oxide) containing precursor composition produced without the organic treatment (and/or, in certain cases, with only a single organic compound treatment) according to the present invention.

As noted, the sulfided Group VI/Group VIII/organic bulk metal catalyst composition described above can be used in the processes herein as a deoxygenation catalyst, either alone or in combination with a binder. When a binder is utilized with the Group VI/Group VIII/organic bulk metal catalysts, it is preferred that the amount of binder is less than 50 wt% based on the weight of the total bound Group VI/Group VIII/organic bulk metal catalyst. More preferably, the amount of binder utilized is less than 20 wt%, more preferably less than 10 wt%, based on the weight of the total bound Group VI/Group VIII/organic bulk metal catalyst.

However, the use is not so limited. In embodiments, the bound Group VI/Group VIII/organic bulk metal catalyst (i.e., catalyst + binder) may comprise from about 5 wt% to about 95 wt% binder based on the total weight of the bound catalyst. In other embodiments, the bound Group VI/Group VIII/organic bulk metal catalyst (i.e., catalyst + binder) may comprise from about 10 wt% to about 90 wt% binder, from about 15 wt% to about 80 wt% binder, or from about 15 wt% to about 75 wt% binder based on the total weight of the bound catalyst. Non-limiting examples of suitable binder materials can include, but are not limited to, silica, silica-alumina (e.g., conventional silica-alumina, silica-coated alumina, alumina-coated silica, or the like, or a combination thereof), alumina (e.g., boehmite, pseudo-boehmite, gibbsite, or the like, or a combination thereof), titania, zirconia, cationic clays or anionic clays (e.g., saponite, bentonite, kaoline, sepiolite, hydrotalcite, or the like, or a combination thereof), and mixtures thereof. In some preferred embodiments, the binder can include silica, silica-alumina, alumina, titania, zirconia, and mixtures thereof. These binders may be applied as such or after peptization. It may also be possible to apply precursors of these binders that, during precursor synthesis, can be converted into any of the above-described binders. Suitable precursors can include, e.g., alkali metal aluminates (alumina binder), water glass (silica binder), a mixture of alkali metal aluminates and water glass (silica-alumina binder), a mixture of sources of a di-, tri-, and/or tetravalent metal, such as a mixture of water-soluble salts of magnesium, aluminum, and/or silicon (cationic clay and/or anionic clay), chlorohydrol, aluminum sulfate, or mixtures thereof.

Generally, the binder material to be used can have lower catalytic activity than the remainder of the catalyst composition, or can have substantially no catalytic activity at all (less than about 5%, based on the catalytic activity of the Group VI/Group VIII/organic bulk metal catalyst composition being about 100%). Consequently, by using a binder material, the activity of the catalyst composition may be reduced. Therefore, the amount of binder material to be used, at least in bulk catalysts, can generally depend on the desired activity of the final catalyst composition. Therefore, to take advantage of the resulting unusual high activity of bulk catalyst deoxygenation catalysts described herein, binder amounts, when added, can most preferably be from about 0.5 wt% to about 20 wt% of the total bound Group VI/Group VIII/organic bulk metal catalyst.

Additional embodiments and details of Group VI/Group VIII/organic bulk metal catalysts that may be utilized in the processes described herein may be found in U.S. Patent Applications Serial No. 13/150,662 and Serial No. 13/150,720. An embodiment of a Group VI/Group VIII/organic bulk metal catalyst as described in this section as utilized in embodiments of the present deoxygenation processes is also exemplified as Catalyst 1 of the Example section herein.

### Catalyst 2 - NiMoW Bulk Metal Catalyst (According to the claimed invention)

A NiMoW bulk metal catalyst is utilized in the deoxygenation stage to remove oxygen particularly present the bio-derived feed portion of the biocomponent feedstream. The NiMoW bulk metal catalyst is comprised of at least 90 wt% nickel (Ni), molybdenum (Mo), and tungsten (W) oxides. More preferably, the NiMoW bulk metal catalyst essentially consists of nickel (Ni), molybdenum (Mo), and tungsten (W) oxides.

This bulk mixed metal oxide composition is preferably sulfided prior to use as a catalyst. The NiMoW portion of the catalyst is preferably of the formula:

(Ni)_{b}(Mo)_{c}(W)_{d}O_{z}

wherein the molar ratio of b:(c+d) is 0.5:1 to 3:1, preferably 0. 75:1 to 1.5:1, more preferably 0.75:1 to 1.25:1. The molar ratio of c:d is preferably > 0.01:1, more preferably > 0.1:1, still more preferably 1:10 to 10:1, still more preferably 1:3 to 3:1; the molar ratio of Mo and W is 2:3 to 3:2; and z=[2b+6(c+d)]/2.

The essentially amorphous material has a unique X-ray diffraction pattern showing crystalline peaks at d=2.53 Angstroms and d=1. 70 Angstroms.

Although not required to practice the present processes, the NiMoW bulk metal deoxygenation catalysts described herein may also include a binder in similar amounts (i.e., binder content as a % of total bound NiMoW bulk metal catalyst) as described above for the Group VI/Group VIII/organic bulk metal catalysts. Additionally or alternatively, the NiMoW bulk metal deoxygenation catalysts described herein may be sulfide in a similar manner(s) as described above for the Group VI/Group VIII/organic bulk metal catalysts.

Additional embodiments and details of NiMoW bulk metal catalysts that may be utilized in the processes described herein may be found in U.S. Patent Application Serial No. 08/900,389. An embodiment of a NiMoW bulk metal catalyst as described in this section as utilized in embodiments of the present deoxygenation processes is also exemplified as Catalyst 2 of the Example section herein.

### Deoxygenation Stage Conditions

[Deleted]

A hydrogen partial pressure of between 200 psig (1.4 MPag) to 2000 psig (13.8 MPag) is used, such as from about from 1500 psig (10.3 MPag) to 2000 psig (13.8 MPag), or from 300 psig (2.1 MPag) to 600 psig (4.1 MPag). Higher hydrogen partial pressures can be effective for maintaining a given deoxygenation activity while increasing the throughput of a reactor. However, higher hydrogen partial pressures may reduce the selectivity of the catalyst for performing deoxygenation versus olefin saturation.

The effective conditions for oxygen removal utilizing the catalysts and processes herein include a temperature, a hydrogen treat gas rate, and a liquid hourly space velocity (LHSV). As will be noted in the Example herein, the bulk metal deoxygenation catalysts possess superior and unexpected activities over the reference particularly when utilized at deoxygenation stage temperatures of about 500°F (260°C) or lower. The operating range for the deoxygenation stage (or zone) herein is from 400°F to 500°F (204°C to 260°C), preferably 400°F to 495°F (204°C to 257°C), from 400°F to 490°F (204°C to 254°C), from 400°F to 475°F (204°C to 246°C), or from 400°F to 450°F (204°C to 232°C).

In the deoxygenation zone, the LHSV is from 0.1 hr⁻¹ to 10 hr⁻¹, preferably from 0.2 hr⁻¹ to 5.0 hr⁻¹. The hydrogen treat gas rate is from 500 scf/B (84 Nm³/m³) to 10,000 scf/B (1685 Nm³/m³). One option for selecting a treat gas rate can be to select a rate based on the expected stoichiometric amount of hydrogen for complete deoxygenation of the feedstock.

At least 75 wt%, more preferably at least 85 wt%, and even more preferably at least 95 wt% of the oxygen is removed from the biocomponent feed.

### Hydrodesulfurization Stage Catalysts and Conditions

After at least partial deoxygenation, the mixture of mineral and biocomponent feed is hydrodesulfurized in one or more reaction stages. A reaction stage can correspond to one or more catalyst beds. Optionally, the bulk metal deoxygenation catalyst and the separate hydrodesulfurization catalyst can be included in a single stage, such as in a single reactor.

Reaction conditions in a hydrodesulfurization stage can be effective conditions suitable for reducing the sulfur content of the feedstream. The reaction conditions include an LHSV of 0.3 to 5.0 hr⁻¹, a total pressure from 200 psig (1.4 MPa) to 3000 psig (20.7 MPa), a treat gas containing at least 80% hydrogen (remainder inert gas) with a hydrogen treat gas rate of 500 scf/bbl (84 m³/m³) to 10000 scf/bbl (1685 m³/m³), and a temperature of from about 400°F (204°C) to about 800°F (427°C). Preferably, the reaction conditions include an LHSV of from about 0.5 to about 1.5 hr⁻¹, a total pressure from about 1400 psig (9.7 MPa) to about 2000 psig (13.8 MPa). The hydrodesulfurization stage and associated hydrodesulfurization catalyst(s) are located in a separate reactor from the deoxygenation stage, so hydrodesulfurization temperatures are from 650°F (343°C) to 750°F (399°C).

Optionally, the hydrodesulfurization stage(s) can be operated at a pressure below about 700 psig (4.8 MPa), or below about 800 psig (5.5 MPa). For example, the pressure in a stage in the hydrotreatment reactor can be at least about 300 psig (2.1 MPa), or at least about 350 psig (2.4 MPa), or at least about 400 psig (2.8 MPa), or at least about 450 psig (3.1 MPa). The pressure in a stage in the hydrodesulfurization reactor can be about 700 psig (4.8 MPa) or less, or about 650 psig (4.5 MPa) or less, or about 600 psig (4.1 MPa) or less. Optionally, the hydrodesulfurization reactor can also include one or more other types of stages or beds, such as hydrocracking or hydrofinishing beds.

The catalyst in a hydrodesulfurization stage can be a conventional hydrodesulfurization catalyst, such as a catalyst composed of a Group VIB metal and/or a Group VIII metal deposited upon a support. Suitable metals include cobalt, nickel, molybdenum, tungsten, or combinations thereof. Preferred combinations of metals include nickel and molybdenum or nickel, cobalt, and molybdenum. Suitable supports include silica, silica-alumina, alumina, and titania. The amount of Group VI metal supported on the catalyst support can vary depending on the catalyst. Suitable total amounts of metals range from about 1 wt% to about 35 wt% relative to the total weight of the catalyst.

The hydrodesulfurization conditions should be selected to reduce the sulfur, and optionally, additionally the nitrogen content of the feed to a desired level. One option is to hydrodesulfurize the feed under conditions effective to reduce the sulfur to less than about 100 wppm, or less than about 50 wppm, or less than about 15 wppm, or less than about 10 wppm. The amount of sulfur remaining can be dependent on the desired standard for the country of use. The amount of nitrogen can similarly be reduced to about 15 wppm or less, or about 10 wppm or less, or about 1 wppm or less.

### Examples of Processing Configurations

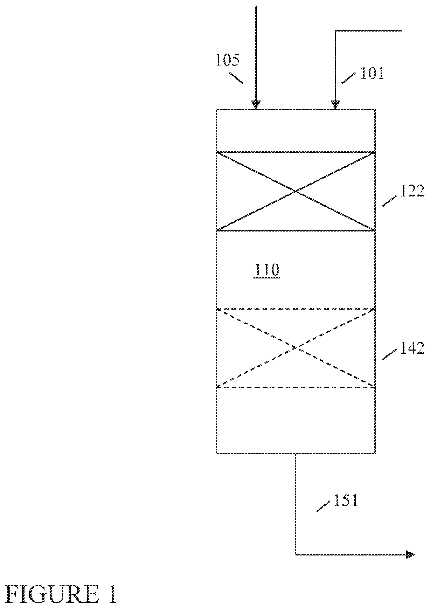

Figure 1 schematically shows an example of a processing configuration. In Figure 1, a reactor 110 is shown that includes two catalyst beds. A first catalyst bed 122 corresponds to a hydrodeoxygenation zone (or "stage") containing a bulk metal deoxygenation catalyst as described herein. Please note that the term "hydrodeoxygenation" as utilized herein simply means that the deoxygenation process/reactions take place in the presence of a hydrogen or hydrogen-containing gas stream. While not required, the reactor 110 in Figure 1 illustrates an optional embodiment (not according to the invention) wherein a second catalyst bed 142 corresponding to a hydrodesulfurization zone (or stage) wherein a hydrodesulfurization catalyst as described herein is further included in the same reactor 110. A biocomponent feed 105, preferably containing a combination of bio-derived components and mineral oil components, can be introduced into the reactor 110 along with a hydrogen-containing stream 101. The mixture can be deoxygenated, and optionally further desulfurized, under effective conditions, including a pressure of 400 psig (2.8 MPag). The configuration in Figure 1 shows only one bed of each type of catalyst, but additional beds of one or both catalysts can also be used. The resulting reactor effluent 151 can be used in any convenient manner, such as by adding the effluent to the diesel pool or subjecting the effluent to further processing. As an alternative, a configuration similar to Figure 1 can be constructed by placing first catalyst bed 122, containing the bulk metal deoxygenation catalyst, and second catalyst bed 142, containing the hydrodesulfurization catalyst, in separate reactors and cascading the effluent the first catalyst bed 122 located in a first into a second reactor containing second catalyst bed 142.

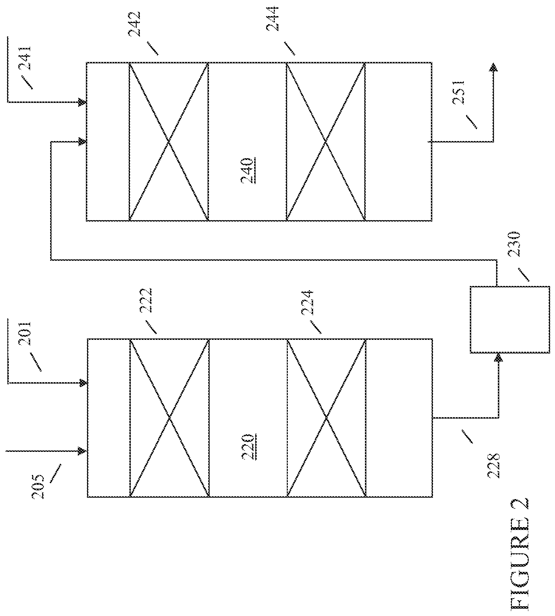

Figure 2 schematically shows an example of another processing configuration. In Figure 2, catalyst beds (or zones) 222 and 224 are located in a first reactor 220. Catalyst beds 222 and 224 in Figure 2 correspond to beds of one or more bulk metal deoxygenation catalysts, as described in embodiments herein. Optionally, a single catalyst bed could be used in reactor 220, or more than two catalyst beds could be used. A biocomponent feed 205 such as described for Figure 1 is contacted with the bulk metal deoxygenation catalyst in a first reactor 220 in the presence of a hydrogen-containing stream 201. The first reactor effluent 228 from reactor 220 containing the deoxygenation stage(s) can then be passed through a separation stage 230. The separation stage 230 can include one or more separators. The separation stage can include, for example, a hot gas-liquid separator to remove at least a majority of the water and carbon oxides present in the effluent. The remaining liquid phase effluent from the separation stage 230 can then be passed into the second reactor 240 under hydrodesulfurization conditions to reduce the amount of sulfur in the feed. The feed is hydrodesulfurized in the presence of the catalyst in beds 242 and 244 and in the presence of a hydrogen-containing stream **241.** The resulting deoxygenated and desulfurized second reactor effluent 251 can be used in any convenient manner, such as by adding the effluent to the diesel pool or subjecting the effluent to further processing. Optionally, a single catalyst bed could be used in the second reactor 240, or more than two catalyst beds could be used. Optionally, one of the catalyst beds in the second reactor 240 can correspond to a hydrocracking or hydrofinishing catalyst.

### Example of Deoxygenating Biocomponent Feed with a Single Metal Catalyst

A series of catalysts and conditions were tested in parallel in a multiple catalyst testing apparatus. The test rig included a plurality of reaction vessels contained in an apparatus with an isothermal reaction zone. Each reaction vessel was loaded with either 1.0 cc or 1.5 cc of catalyst,. The catalysts were sulfided by exposing the catalysts to a feed spiked with dimethyl disulfide (DMDS) to achieve 2.6 wt% total sulfur and held at a temperature of at least 450°F for an extended period of time. Spiking with DMDS increased the sulfur concentration from 1.37 wt% to 2.6 wt% in the sulfiding feed. The sulfiding feed had a T10 boiling point of 427°F and a final boiling point of 777°F. The flow rate of the spiked feed in each reactor during sulfidation was 1.5 cc per hour.

The data presented herein includes comparative experiments for four (4) catalysts corresponding as follows.

Catalyst 1 (not according to the claimed invention) was an embodiment of the GroupVI/GroupVIII/organic bulk metal deoxygenation catalysts as described herein. This was a bulk mixed metal catalyst comprising Ni and W which was formulated by adding on organic additive to the active metal slurry, and further drying at a temperature low enough to maintain a portion of the organic carbon compounds on the catalyst and then sulfiding the catalyst containing Ni oxide, W oxide and the residual organic carbon compounds.

Catalyst 2 (according to the claimed invention) was an embodiment of the Ni/Mo/W bulk metal deoxygenation catalysts as described herein. This was a bulk mixed metal catalyst comprising Ni, Mo and W.

Catalyst 3 (reference catalyst) was a commercially available supported NiMo hydroprocessing catalyst.

Catalyst 4 (reference catalyst) was a commercially available alumina supported CoMo hydroprocessing catalyst.

After sulfidation, the sulfided catalysts were used to treat a feed composed of 30 wt% soybean oil and 70 wt% dodecane. The soybean oil had an oxygen content of 11.0 wt%. The catalysts were then subjected to a series of ten (10) different operating conditions and the resulting products from each of the catalyst samples was periodically sampled and measured. Table 1 shows the ten (10) separate reaction conditions under which the catalysts were studied.

**Table 1**

| Reaction Conditions | | | | |
|---|---|---|---|---|
| Condition | Temperature (°F) | Pressure (psig) | Feed Bio Content (wt% bio) | Liquid Feed Rate (cc hr⁻¹) |
| 1 | 500 | 400 | 30 | 1.5 |
| 2 | 575 | 400 | 30 | 1.5 |
| 3 | 650 | 400 | 30 | 1.5 |
| 4 | 550 | 400 | 50 | 1.5 |
| 5 | 550 | 1800 | 50 | 1.5 |
| 6 | 475 | 1800 | 50 | 1.5 |
| 7 | 600 | 1800 | 50 | 1.5 |
| 8 | 600 | 1800 | 30 | 2.6 |
| 9 | 550 | 1800 | 30 | 2.6 |
| 10 | 575 | 400 | 30 | 1.5 |

Using the parallel experimental apparatus, each of the four catalysts were tested at each of the ten conditions in Table 1. In addition to the above, at conditions 1-4 the feed included a spiking agent to produce a sulfur level of 500 wppm. The amount of spiking agent was increased to produce a sulfur level of 1 wt% for conditions 5-10. In the following figures, each of the conditions is indicated in the horizontal axis direction by the numbers 1-10 inserted into each graph. Each change in condition is also shown by a dotted dividing line.

As an initial characteristic, the amount of deoxygenation that occurred for each catalyst at each condition was determined. One method for determining the deoxygenation would be to do a total mass balance of all oxygen-containing species in the feed and the products. However, this was not practical to perform on a daily basis, so instead the amount of conversion of molecules from above 322°C to below 322°C was measured. For the soybean oil feed used in the experiments, molecules boiling above 322°C correspond to molecules having greater than 18 carbon atoms, while any deoxygenated products will have 18 carbon atoms or less.

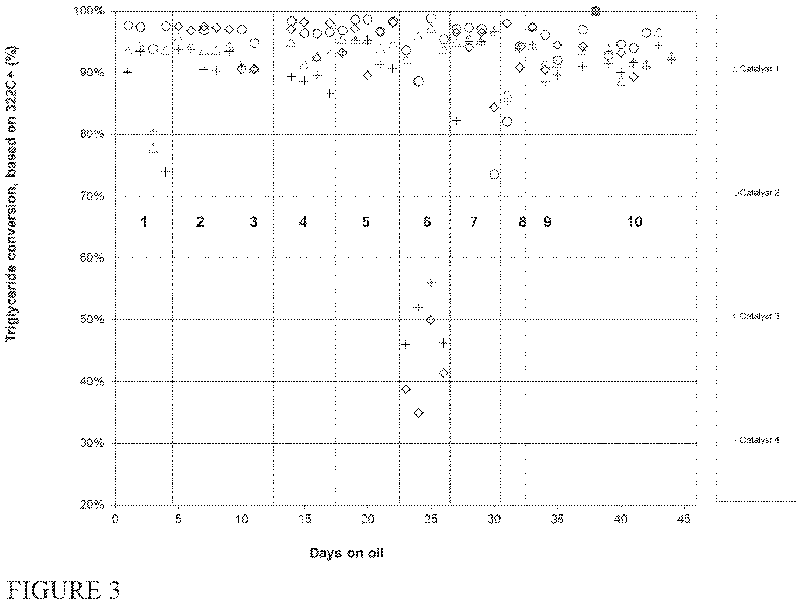

Figure 3 shows the amount of triglyceride conversion relative to 322°C for the four (4) catalysts tested over the various ten (10) test conditions.

It can be seen in Figure 3 that under at reaction temperatures above about 500°F, all four (4) of the catalysts tested performed fairly similarly for triglyceride conversion. However, when the reaction temperatures were dropped below about 500°F, a very significant difference in conversion activity was witnessed between the two (2) bulk mixed metal catalysts (Catalysts 1 and 2) and the two (2) reference catalysts (Catalysts 3 and 4). At temperatures below about 500°F, the triglyceride conversion levels of Catalysts 1 and 2 remained fairly constant and maintained a triglyceride conversion rate of about 95 to 100%. In contrast, the activity of reference Catalysts 3 and 4 dropped of precipitously to a conversion rate of about 30 to 60%. The comparative results at Condition 6 in the testing are summarized as follows in Table 2.

**Table 2**

| **Triglyceride Conversions at Test Condition 6** | |
|---|---|
| **Catalyst** | **Triglyceride Conversion** (range based on 322°C+ conversion) |
| Catalyst 1 (of invention) | 95-100% |
| Catalyst 2 (of invention) | 95-100% |
| Catalyst 3 (reference) | 30-60% |
| Catalyst 4 (reference) | 30-60% |

As can be seen from this Example, Catalysts 1 and 2 show excellent conversion/activity stability over the wide range of operating temperatures. This leads to the ability to control related reaction temperatures over a wider range without experiencing significant loss in catalytic activity. Additionally, Catalysts 1 and 2 allow the hydrodeoxygenation processes to be run under lower temperatures which results in significant reductions in overall commercial unit operating energy costs.

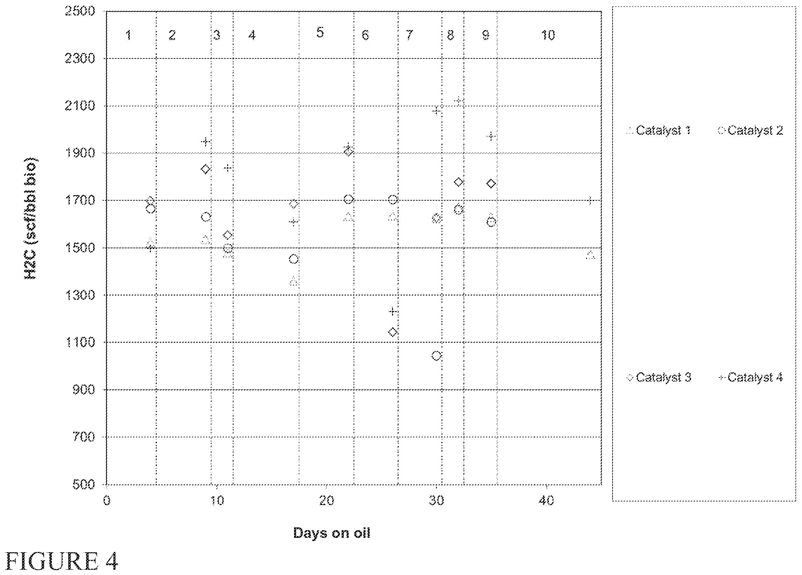

Figure 4 shows the amount of hydrogen consumption per barrel of the bio-feed component for the four (4) catalysts tested over the various ten (10) test conditions. A second benefit of Catalysts 1 and 2 can be shown here.
Due to the higher stability in the conversion activity of the Catalysts 1 and 2, the hydrogen consumption level for Catalysts 1 and 2 are more stable over the various operating conditions than hydrogen consumption levels for reference Catalysts 3 and 4. This again leads to more stability in operating the processes over a greater range of processing conditions. This can assist with stabilizing associated refinery processes from which the necessary hydrogen is drawn resulting in more stable inter-unit refinery operations.

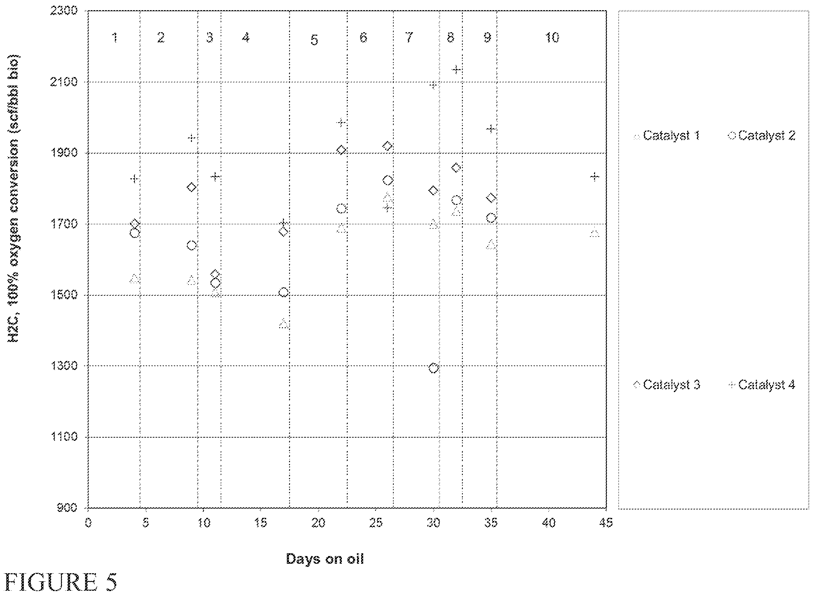

A third, significantly economic benefit of the present invention is illustrated in Figure 5. Figure 5 shows the estimated amount of hydrogen consumption per barrel of the bio-feed component at 100% deoxygenation for the four (4) catalysts tested over the various ten (10) test conditions. As there are several reaction routes through which the various catalysts can deoxygenate the bio-component of the feed, the amount of hydrogen required on a "unit basis" of deoxygenated feed will differ.

The calculations for the hydrogen usage per barrel of 100% deoxygenated biofeed are based on an analysis of the product streams from each of the catalyst/test conditions. As can be seen in Figure 5, bulk metal deoxygenation Catalyst 1 and 2 have a lower hydrogen consumption per unit bio-feed at constant conversion (i.e., 100% deoxygenation) in almost all tested cases. Therefore, under most general hydrodeoxygenation conditions, Catalysts 1 and 2 have the added benefit of consuming less hydrogen at constant deoxygenation levels.

[Deleted]

[Deleted]

## Claims

1. A method for hydroprocessing a biocomponent feedstock, comprising:
exposing a biocomponent feedstock comprising at least a bio-derived fraction to a bulk mixed metal catalyst in the presence of hydrogen under effective deoxygenation conditions, the bulk mixed metal catalyst comprising at least one Group VI metal and at least one Group VIII metal;
wherein the bulk mixed metal catalyst is comprised of at least 90 wt% Mo, W, and
Ni, and this portion of the bulk mixed metal catalyst has the formula:
(Ni)_{b}(Mo)_{c}(W)_{d}Oz
wherein the molar ratio of b:(c+d) is 0.5:1 to 3:1; the molar ratio of c:d is preferably > 0.01:1; the molar ratio of Mo and W is 2:3 to 3:2; and z=[2b+6(c+d)]/2;
wherein the effective deoxygenation conditions include a hydrogen partial pressure of from 200 psig (1.4 MPag) to 2000 psig (13.8 MPag), a reaction temperature of from 400^{O}F to 500^{O}F (204^{O}C to 260^{O}C), a liquid hourly space velocity of from 0.1 hr⁻¹ to 10 hr⁻¹, and a hydrogen treat gas rate from 500 scf/B (84 Nm³/m³) to 10,000 scf/B (1685 Nm³/m³);
forming a deoxygenated effluent wherein at least 75 wt% of the oxygen has been removed from the biocomponent feedstock compounds; and
exposing at least a portion of the deoxygenated effluent to a hydrodesulfurization catalyst under effective hydrodesulfurization conditions to produce a deoxygenated/desulfurized effluent having a sulfur content of 100 wppm or less, wherein the effective hydrodesulfurization conditions include a total pressure from 200 psig (1.4 MPa) to 3000 psig (20.7 MPa), a temperature of from 650^{O}F (343^{O}C) to 750^{O}F (399^{O}C), a liquid hourly space velocity of 0.3 to 5.0 hr⁻¹, a treat gas containing at least 80% hydrogen, and a hydrogen treat gas rate of 500 scf/bbl (84m³/m³) to 10000 scf/bbl (1685 m³/m³); and wherein the bulk mixed metal catalyst and the hydrodesulfurization catalyst are each located in separate reactors.

2. The method of claim 1, wherein the biocomponent feedstock further comprises a mineral oil fraction.

3. The method of claim 2, wherein the bulk mixed metal catalyst is further comprised of at least one organic compound and is sulfided prior to exposing the biocomponent feedstock to the bulk mixed metal catalyst, and the at least one organic is present on the bulk mixed metal catalyst at the time the catalyst is exposed to the sulfiding conditions.

4. The method of any one of the previous claims, wherein the bulk mixed metal catalyst is further sulfided prior to exposing the biocomponent feedstock to the bulk mixed metal catalyst.

5. The method of any one of the previous claims, wherein the effective deoxygenation conditions include a reaction temperature of from 400^{O}F to 490^{O}F (204^{O}C to 254^{O}C).

6. The method of claim 1, wherein hydrodesulfurization catalyst is comprised of at least one Group VIB metal and at least one Group VIII metal deposited upon a support, wherein the support is comprised of a material selected from silica, silica-alumina, alumina, and titania.

## Patentansprüche

1. Verfahren zur Hydroprocessing eines Biokomponenten-Einsatzmaterials, umfassend:
Aussetzen eines Biokomponenten-Einsatzmaterials, das mindestens eine biologisch gewonnene Fraktion umfasst, einem Massen-Mischmetallkatalysator in Gegenwart von Wasserstoff unter wirksamen Desoxygenierungsbedingungen, wobei der Massen-Mischmetallkatalysator mindestens ein Metall der Gruppe VI und mindestens ein Metall der Gruppe VIII umfasst;
wobei die Masse des Mischmetallkatalysators aus mindestens 90 Gew.% Mo, W und Ni besteht und dieser Teil des Mischmetallkatalysators die Formel hat:
(Ni)_{b}(Mo)_{c}(W)_{d}OZ
wobei das molare Verhältnis von b: (c+d) 0,5:1 bis 3:1 beträgt; das molare Verhältnis von c:d vorzugsweise > 0,01:1 ist; das molare Verhältnis von Mo und W 2:3 bis 3:2 beträgt; und z=[2b+6(c+d)]/2;
wobei die effektiven Desoxygenierungsbedingungen einen Wasserstoffpartialdruck von 200 psig (1,4 MPag) bis 2000 psig (13,8 MPag), eine Reaktionstemperatur von 400°F bis 500°F (204°C bis 260°C), eine stündliche Flüssigkeitsraumgeschwindigkeit von 0,1 h⁻¹ bis 10 h⁻¹ und eine Wasserstoffbehandlungsgasrate von 500 scf/B (84 Nm³/m³) bis 10.000 scf/B (1685 Nm³/m³) einschließen;
Bildung eines desoxidierten Effluents, in dem mindestens 75 Gew.% des Sauerstoffs aus den Biokomponenten-Einsatzmaterialverbindungen entfernt wurden; und
Aussetzen mindestens eines Teils des desoxidierten Effluents gegenüber einem Hydrodesulfurierungskatalysator unter wirksamen Hydrodesulfurierungsbedingungen, um ein desoxidiertes/entschwefeltes Effluent mit einem Schwefelgehalt von 100 Gew.-ppm oder weniger herzustellen, wobei die wirksamen Hydrodesulfurierungsbedingungen einen Gesamtdruck von 200 psig (1,4 MPa) bis 3000 psig (20,7 MPa), eine Temperatur von 650°F (343 °C) bis 750°F (399 °C), eine stündliche Flüssigkeitsraumgeschwindigkeit von 0,3 bis 5,0 h⁻¹, ein Behandlungsgas, das mindestens 80% Wasserstoff enthält, und eine Wasserstoffbehandlungsgasrate von 500 scf/bbl (84 m³/m³) bis 10000 scf/bbl (1685 m³/m³) einschließen; und wobei der Massen-Mischmetallkatalysator und der Hydrodesulfurierungskatalysator jeweils in getrennten Reaktoren angeordnet sind.

2. Verfahren nach Anspruch 1, wobei das Biokomponenten-Einsatzmaterial außerdem eine Mineralölfraktion umfasst.

3. Verfahren nach Anspruch 2, wobei der Massen-Mischmetallkatalysator ferner mindestens eine organische Verbindung enthält und sulfidiert wird, bevor das Biokomponenten-Einsatzmaterial dem Massen-Mischmetallkatalysator ausgesetzt wird, und die mindestens eine organische Verbindung auf dem Massen-Mischmetallkatalysator zu dem Zeitpunkt vorhanden ist, zu dem der Katalysator den sulfidierenden Bedingungen ausgesetzt wird.

4. Verfahren nach einem der vorhergehenden Ansprüche, wobei der Massen-Mischmetallkatalysator weiter sulfidiert wird, bevor das Biokomponenten-Einsatzmaterial dem Massen-Mischmetallkatalysator ausgesetzt wird.

5. Verfahren nach einem der vorhergehenden Ansprüche, wobei die wirksamen Desoxygenierungsbedingungen eine Reaktionstemperatur von 400°F bis 490°F (204°C bis 254°C) umfassen.

6. Verfahren nach Anspruch 1, wobei der Hydrodesulfurierungskatalysator aus mindestens einem Metall der Gruppe VIB und mindestens einem Metall der Gruppe VIII besteht, die auf einem Träger abgeschieden sind, wobei der Träger aus einem Material besteht, das aus Siliciumdioxid, Siliciumdioxid-Aluminiumoxid, Aluminiumoxid und Titanoxid ausgewählt ist.

## Revendications

1. Procédé pour l'hydrotraitement d'une matière première de biocomposant, comprenant :
l'exposition d'une matière première de biocomposant comprenant au moins une fraction d'origine biologique à un catalyseur métallique mixte en vrac en la présence d'hydrogène dans des conditions de désoxygénation efficaces, le catalyseur métallique mixte en vrac comprenant au moins un métal du Groupe VI et au moins un métal du Groupe VIII ;
le catalyseur métallique mixte en vrac étant composé d'au moins 90 % en poids de MO, de W et de Ni, et cette partie du catalyseur métallique mixte en vrac possédant la formule :
**(Ni)_{b}(Mo)_{c}(W)_{d}Oz**
le rapport molaire de b : (c + d) étant de 0,5 : 1 à 3 : 1 ; le rapport molaire de c : d étant préférablement > 0,01 : 1 ; le rapport molaire de Mo et W étant de 2 : 3 à 3 : 2 et z = [2b + 6 (c + d)]/2 ;
les conditions de désoxygénation efficaces comportant une pression partielle d'hydrogène allant de 200 psig (1,4 MPag) à 2 000 psig (13,8 MPag), une température de réaction allant de 400 °F à 500 °F (204 °C à 260 °C), une vitesse spatiale horaire de liquide allant de 0,1 h⁻¹ à 10 h⁻¹, et un débit de gaz de traitement à l'hydrogène de 500 scf/B (84 Nm³/m³) à 10 000 scf/B (1 685 Nm³/m³);
la formation d'un effluent désoxygéné, au moins 75 % en poids de l'oxygène ayant été éliminé des composés de matière première de biocomposant ; et
l'exposition d'au moins une partie de l'effluent désoxygéné à un catalyseur d'hydrodésulfuration dans des conditions d'hydrodésulfuration efficaces pour produire un effluent désoxygéné/désulfuré possédant une teneur en soufre de 100 ppm en poids ou moins, les conditions d'hydrodésulfuration efficaces comportant une pression totale de 200 psig (1,4 MPa) à 3 000 psig (20,7 MPa), une température allant de 650 °F (343 °C) à 750 °F (399 °C), une vitesse spatiale horaire de liquide allant de 0,3 h⁻¹ à 5,0 h⁻¹, un gaz de traitement contenant au moins 80 % d'hydrogène, et un débit de gaz de traitement à l'hydrogène de 500 scf/bbl (84 m³/m³) à 10 000 scf/bbl (1 685 m³/m³) ; et
le catalyseur métallique mixte en vrac et le catalyseur d'hydrodésulfuration étant chacun situés dans des réacteurs distincts.

2. Procédé selon la revendication 1, la matière première de biocomposant comprenant en outre une fraction d'huile minérale.

3. Procédé selon la revendication 2, le catalyseur métallique mixte en vrac étant en outre composé d'au moins un composé organique et étant sulfuré avant l'exposition de la matière première de biocomposant au catalyseur métallique mixte en vrac, et l'au moins un composé organique étant présent sur le catalyseur métallique mixte en vrac au moment où le catalyseur est exposé aux conditions de sulfuration.

4. Procédé selon l'une quelconque des revendications précédentes, le catalyseur métallique mixte en vrac étant en outre sulfuré avant l'exposition de la matière première de biocomposant au catalyseur métallique mixte en vrac.

5. Procédé selon l'une quelconque des revendications précédentes, les conditions de désoxygénation efficaces comportant une température de réaction allant de 400 °F à 490 °F (204 °C à 254 °C).

6. Procédé selon la revendication 1, le catalyseur d'hydrodésulfuration étant composé d'au moins un métal du Groupe VIB et d'au moins un métal du Groupe VIII déposés sur un support, le support étant composé d'un matériau choisi parmi une silice, une silice-alumine, une alumine et un oxyde de titane.
